# EUROPEAN PATENT SPECIFICATION

(11) **EP 2 610 286 B1**
(45) Date of publication and mention of the grant of the patent: **09.03.2016**
(21) Application number: 12197320.0
(22) Date of filing: 14.12.2012
(51) Int. Cl.: C08J 9/00, C08J 9/04, C08L 3/02, B65D 65/46

(54) **Foam and methods of making the same**
Schaum und Herstellungsverfahren dafür
Mousse et son procédé de fabrication

(30) Priority: 28.12.2011 US 201113338993
(43) Date of publication of application: 03.07.2013
(73) Proprietor: Sealed Air Corporation (US), Saddle Brook, New Jersey 07663 (US)
(72) Inventor: Lacopo, Joseph, Branchville NJ, 07826 (US); Kannankeril, Charles, North Caldwell NJ, 07006 (US)
(74) Representative: Jackson, Martin Peter

(56) References cited:
- US-A- 5 372 877
- US-A- 5 506 277

## Description

### TECHNICAL FIELD

The presently disclosed subject matter relates to foams, for example, foams useful as packaging materials.

### BACKGROUND

Packaging materials (e.g., expanded foam articles) include material which cushions an item that is to be shipped in a container (e.g., a box) and which helps protect the item from breakage or damage. Packaging materials can be provided in a variety of forms, including loose fill packaging elements ("peanuts"), small discs (sometimes referred to as "void fill"), corner protectors, dividers, etc.

Some foams made using starch have been found to become undesirably brittle and friable under certain conditions. The brittle foam may crumble easily thereby reducing its cushioning properties. Additionally, brittle foam may undesirably produce a significant amount of dust (e.g., fine flakes of packaging material) upon rubbing against each other or the packaged product.

Accordingly, there still remains a need for a foam having improved properties, for example in use as a foam packaging material.

US 5,506,277 discloses a foam product according to the precharacterizing section of claim 1.

US 5,372,877 discloses a biodegradable foam product composed of paper fibers or other cellulosic biodegradable material with a superabsorbent polymer and shaped into any desired shape and size.

### BRIEF SUMMARY

The present invention provides a foam product comprising: (a) starch; and (b) superabsorbent polymer in an amount ranging from 0.001 to 10% by weight of the foam product, characterized in that the amount of superabsorbent polymer is at most 1% by weight of foam product.

One of more embodiments of the present invention may address one or more of the aforementioned problems.

In certain preferred embodiments, the foam product also includes a binding agent.

In another aspect, embodiments of the present invention provide an expandable composition that can be used to form foams. Certain embodiments include a starch, a SAP, and an expanding agent. In certain preferred embodiments, the expandable composition also includes a binding agent.

Additionally, embodiments of the present invention provide a process for producing a foam product. Certain processes according to embodiments of the present invention include steps of mixing starch, expanding agent, and SAP to create an expandable composition over a given total amount of time and expanding the expandable composition to create the foam product. Expandable compositions in accordance with embodiments of the present invention can be expanded, such as by an extrusion process, to provide a foam product. In certain embodiments, the mixing step can occur either in a mixing section of an extruder or prior to a step of feeding the expandable composition to an extruder. In certain preferred processes according to embodiments of the present invention, the mixing step comprises mixing starch, expanding agent, SAP, and binding agent to create the expandable composition.

### BRIEF DESCRIPTION OF THE SEVERAL VIEWS OF THE DRAWING(S)

Having thus described embodiments of the invention in general terms, reference will now be made to the accompanying drawings, which are not necessarily to scale, and wherein:
Figure 1 shows loose fill packaging elements according to one embodiment of the present invention, and
Figure 2 shows comparative loose fill packaging elements being devoid of a superabsorbent polymer.

### DETAILED DESCRIPTION

The present invention now will be described more fully hereinafter with reference to the accompanying drawings, in which some, but not all embodiments of the inventions are shown. Indeed, this invention can be embodied in many different forms and should not be construed as limited to the embodiments set forth herein; rather, these embodiments are provided so that this disclosure will satisfy applicable legal requirements. As used in the specification, and in the appended claims, the singular forms "a", "an", "the", include plural referents unless the context clearly dictates otherwise.

In one aspect, embodiments of the present invention are directed to foam packaging products (e.g., loose fill packaging elements, sheets, rods, planks, tubing, etc.) that can maintain high flexibility and desirable cushioning properties in certain environmental conditions (e.g., at elevated temperatures, freezing temperatures, and low humidity). In certain embodiments, foam products include a starch and at least one SAP. Preferably, the SAP content ranges from about 0.001 to about 10% by weight of the foam product. In addition to including a SAP, foam products in accordance with embodiments of the present invention can include a binding agent.

### Starch

The foam product (i.e., foam) comprises starch. Starch in its various forms is well known in the art, comprising various amounts of amylose and/or amylopectin forms of starch. Amylose is essentially a linear polymer having a molecular weight in the range of 100,000-500,000, whereas amylopectin is a highly branched polymer having a molecular weight of up to several million. Useful natural starch can be obtained from one or more cereals or grains (e.g., corn, wheat, rice and sorghum), roots (e.g., cassava), legumes (e.g., peas), and tubers (e.g., potato and canna). Alternatively, flours having starch as a predominant component can be used in accordance with various embodiments of the present invention. In certain embodiments, useful starch includes corn starch (i.e., starch derived from corn), potato starch, wheat starch, soybean starch, rice starch, sorghum starch, and tapioca starch.

The starch useful for one or more of the foam embodiments may comprise chemically modified starch, such as oxidized starch, etherificated starch, esterified starch, crosslinked starch, or starch having such chemical modifications combined. Chemically modified starch typically has hydroxyl groups reacted with one or more reagents. The degree of substitution associated with the reaction ranges from 0 (for native starch) up to 3 (fully substituted chemically modified starch). Useful etherificated starches include those having hydroxyl groups substituted with ethyl and/or propyl groups. Useful esterified starches include those having hydroxyl groups substituted with acetyl, propanoyl, and/or butanoyl groups. For example, the starch may comprise starch acetate having a degree of substitution (DS) of at least 0.1

Starch can be chemically modified by typical processes known in the art (e.g., esterification, etherification, oxidation, acid hydrolysis, cross-linking and enzyme conversion). In some embodiments, chemically modified starches include esters (e.g., acetate ester of dicarboxylic acids/anhydrides), alkenyl-succinic acids, anhydrides, ethers (e.g., hydroxyethyl and hydroxypropyl starches), starches oxidized with hypochlorite, starches reacted with cross-linking agents (e.g., phosphorus oxychloride, epichlorhydrin, hydrophobic cationic epoxides), and phosphate derivatives prepared by reaction with sodium or potassium orthophosphate or tripolyphosphate.

For instance, starch esters can be prepared using a wide variety of anhydrides, organic acids, acid chlorides, or other esterification reagents. Examples of anhydrides include acetic, propionic, butyric, and so forth. Furthermore, the degree of esterification can vary as desired, such as from one to three per glucosidic unit of the starch. Similar or different esterified starches, with varying degrees of esterification, can be blended together if so desired. Although esterified starches are stable to attack by amylases, in the environment the esterified starches are attached by microorganisms secreting esterases which hydrolyze the ester linkage.

The quantity of starch present within foam products, according to certain embodiments, can constitute a majority of the foam product. For instance, foam products in accordance with certain embodiments may comprise starch in an amount of about at least any of the following: 50, 60, 70, and 75% and/or at most about any of the following 99, 95, 90, and 85% by weight of the foam product.

### Super Absorbent Polymer

Foam products according to embodiments of the present invention can also include one or more SAPs. The term "superabsorbent polymer" or SAP refers to a polymer having a capacity for absorbing and/or storing liquid (e.g., water). SAPs useful in certain embodiments of the present invention include a variety of water-insoluble, but water-swellable polymers capable of absorbing relatively large quantities of fluids. SAPs are capable of absorbing and retaining amounts of aqueous fluids equivalent to many times their own weight. As is known in the art, SAPs can absorb several hundreds of times its own weight (e.g., 50-1000, 200-500, 200-300 times its own weight) in water that can be stored within the molecular structure of the SAP. As water travels into an SAP particle, the SAP particle swells to accommodate the additional water molecules. SAPs are most commonly available as dry, granular powders, but gradually turn into a soft gel upon absorbing water. Such SAPs are generally known in the art. See for example "Modern Super Absorbent Technology" by F.L. Buchholz and A.T. Graham, published by Wiley VCH, New York, 1998.

SAP may be of one type (i.e., homogeneous) or mixtures of polymers. The SAPs may have a size, shape, and/or morphology varying over a wide range. When the SAP is in the form of particles, the particles may not have a large ratio of greatest dimension to smallest dimension. Suitable particle sizes and methods for determining particle sizes of the SAP particles are described in U.S. Pat. No. 5,061,259.

SAPs may also be referred to in the art as "hydrogels," "super absorbents," "absorbent gel materials," "hydrogel forming absorbent polymers," or "hydrocolloids." See, for example, U.S. Pat. No. 3,699,103; U.S. Pat. No. 3,770,731; U.S. Pat. No. 5,562,646 (Goldman et al.), issued Oct. 8, 1996; and U.S. Pat. No. 5,599,335 (Goldman et al.), issued Feb. 4, 1997, which disclose SAPs.

SAPs may fall into the following types: (1) substituted and unsubstituted natural and synthetic polymers including polysaccharides, such as carboxymethyl starch, carboxymethyl cellulose, and hydroxypropyl cellulose; (2) nonionic types such as polyvinyl alcohol, and polyvinyl ethers; (3) cationic types such as polyvinyl pyridine, polyvinyl morpholinione, and N,N-dimethylaminoethyl or N,N-diethylaminopropyl acrylates and methacrylates, and the respective quaternary salts thereof

Additionally, SAPs may comprise a homo-polymer of partially neutralized alpha, beta-unsaturated carboxylic acid or a copolymer of partially neutralized alpha, beta-unsaturated carboxylic acid copolymerized with a monomer co-polymerizable therewith. Furthermore, the homo-polymer or copolymer can comprise aliphatic groups, wherein at least some of the aliphatic groups are at least partially comprised by the surface of the SAP particles.

In certain embodiments, SAPs utilized comprise cross-linked networks of flexible polymer chains. Small amounts of cross-linkers can play a major role in improving the swelling and mechanical properties of SAPs. In certain preferred embodiments, SAPs comprise polymer networks that carry dissociated ionic functional groups to facilitate further water absorption. Examples of suitable SAPs that can be used in accordance with certain embodiments of the present invention may comprise one or more of the following polymers (i.e., types of SAP): (1) alkali metal salts of polyacrylic acids, (2) polyacrylamides, (3) unsaturated carboxylic acid anhydride copolymers, for example, ethylene/maleic anhydride copolymers and isobutylene/maleic anhydride copolymer, (4) polyvinyl ethers, (5) cellulose-based SAPs, for example, hydroxypropylcellulose and carboxy-methyl-cellulose, (6) polyvinyl morpholinone, (7) polymers and copolymers of vinyl sulfonic acid, (8) polyacrylates, (9) polyvinyl pyridine, (10) isobutylene maleic anhydride copolymers, and combinations thereof.

In one preferred embodiment, the SAP comprises an alkali metal salt of a cross-linked polyacrylate (e.g., sodium polyacrylate) or carboxy-methyl-cellulose. Sodium polyacrylate is commercially available under the trade name FAVOR PAC 530 from Evonik Industries (Germany). However, polymer materials for use in making such SAPs include slightly network cross linked polymers of partially neutralized polyacrylic acids and starch derivatives thereof. The SAP may comprise from 25% to 95% by weight, more preferably from 50% to 80% by weight, neutralized, slightly network cross-linked, polyacrylic acid. Network cross-linking renders the polymer substantially water-insoluble and, in part, determines the absorptive capacity and extractable polymer content characteristics of the hydrogel-forming absorbent polymers. Processes for network cross linking these polymers and typical network cross-linking agents are described in greater detail in U.S. Pat. No. 4,076,663.

SAPs may be made, for example, by initially polymerizing unsaturated carboxylic acids or derivatives thereof, such as acrylic acid, alkali metal (e.g., sodium and/or potassium) or ammonium salts of acrylic acid, alkyl acrylates, and the like. These polymers are rendered water-insoluble, yet water-swellable, by slightly and homogeneously cross-linking the carboxyl group-containing polymer chains with conventional di- or poly-functional monomer materials, such as N,N'-methylenebisacrylamide, trimethylol-propane-triacrylate or triallyl-amine. These slightly cross-linked absorbent polymers still comprise a multiplicity of anionic (charged) carboxyl groups attached to the polymer backbone.

Foam products according to certain embodiments of the present invention may comprise SAP in the amount of at least about any of the follow: 0.001, 0.01, 0.1, 0.5, and 1%; and comprises SAP in an amount of at most 1%, by weight of the foam product.

### Binding Agent

In addition to including a SAP, foam products in accordance with embodiments of the present invention may comprise a binding agent. A binding agent as used herein preferably comprises a water-soluble substance that assists in rendering the end product foam less friable and/or of lower density than if the binding agent were not present. In general, foam products having a higher weight percentage of a binding agent according to certain embodiments exhibit a lower density. Moreover, the binding agent according to embodiments of the present invention may facilitate a foam product's ability to retain a shape of an extruding die.

As used herein, "water soluble" means that the substance becomes partially or completely molecularly or ionically dispersed in water as a solvent at room temperature 20° (68°F). Certain binding agents suitable for various embodiments of the present invention, therefore, may be only partially soluble such that some but not all of the binding agent molecularly or ionically disperses in water while the remaining amount remains in a solid or gel-like state.

The binding agent may comprise a water-soluble polymer. As used herein, "water soluble polymer" has the meaning as used by those of skill in the art. Useful water soluble polymers may comprise natural water-soluble polymers (such as gums), semisynthetic water-soluble polymers (e.g., one or more of chemically treated natural polymers such as carboxymethyl cellulose, methyl cellulose, cellulose ethers, and modified starches): and/or synthetic water-soluble polymers (e.g., one or more of polyvinyl alcohol, ethylene oxide polymers, polyvinyl pyrrolidone, and polyethyleneimine). Additionally, the binding agent may comprise a polyol agent, such as a polyhydric alcohol. Useful polyhydric alcohols may include one or more of any of the following: glycerol, ethylene glycol, propylene glycol, ethylene diglycol, propylene diglycol, ethylene triglycol, propylene triglycol, polyethylene glycol, polypropylene glycol, 1,2-propanediol, 1,3-propanediol, 1,2-butanediol, 1,3-butanediol, 1,4- butanediol, 1,5-pentanediol, 1,6-hexanediol, 1,5hexanediol, 1,2,6-hexanetriol, 1,3,5-hexanetriol, neopentyl glycol, trimethylol propane, pentaerythritol, dextrose, mannitol, sorbitol, xylitol, maltitol, and isomalt and the acetate, ethoxylate, and propoxylate derivatives thereof, corn syrup, and high fructose corn syrup.

In certain embodiments, the foam product may comprise binder in any of the following amounts: at least about any of 0.5, 1, 3, 5%; and/or at most about any of 20, 15, 10, and 5%, based on the weight of the foam product. In certain preferred embodiments, the binding agent can comprise polyvinyl alcohol ("PVOH") having a molecular weight ranging from any of the following: at least any of 30,000, 50,000, 85,000, 100,000; and /or at most about any of 150,000, 185,000, 200,000, and 250,000.

In addition to the particular components discussed above, foam products according to certain embodiments of the present invention can include one or more additional additives. These additional additives can be present in the foam product from about 0.01 to about 3% (preferably less than 1%) by weight of the foam product. For instance, certain embodiments can include fillers, pigments, antioxidants, UV stabilizers, thermal stabilizers, flame retardants, slip agents, antistatic agents, antimicrobial agents, photostabilizers, lubricants, antiblocking agents, smoke suppressants, processing aids, and odor neutralizers.

In accordance with certain embodiments, foam products comprise a moister content (e.g., water content) in any of the following amounts: at least about any of 1, 5, 10, 15%; and/or at most about any of 50, 40, 30, 25, and 20%, based on the weight of the foam product.

Foam products in accordance with certain embodiments of the present invention can be provided in multiple shapes and/or forms. By way of example, foam products can be provided in the form of loose fill packaging elements, sheets, rods, planks, or tubing. For instance, the foams of various embodiments disclosed herein may be extruded in various forms, as discussed herein. For example, the foam may take the form of a sheet (e.g., plank) having a thickness of at least any of 0.38, 0.76, 2.0, 2.5, 5.1, 3.8, 7.6, 10.2, 20, 25, 38 and 51 mm (0.015, 0.03, 0.08, 0.10, 0.20, 0.15, 0.3, 0.4, 0.8, 1, 1.5, and 2 inches); and/or at most any of 127, 102, 76, 51, 25, 20, 10, 7.6, 5.1, 3.8 and 2.5 mm (5, 4, 3, 2, 1, 0.8, 0.4, 0.3, 0.20, 0.15, and 0.1 inches). In industry the term "sheet" typically refers to a relatively thin web of foam that is typically inherently somewhat flexible because its thickness is relatively thin; and the term "plank" typically refers to a relatively thick web of foam that is typically inherently somewhat rigid because its thickness is relatively thick. However, for convenience sake, the term "sheet" when used generally herein is considered as including a "plank" configuration, and a thicknesses range will be recited to distinguish thicknesses rather than relying on the terms "plank" and "sheet" for thickness distinctions. The sheet (e.g., plank) may have an aspect ratio (i.e., width in the transverse direction divided by the thickness) of at least, and/or at most, any of the following: 10; 20; 100; 500; 1,500; 1,600; and 2,500. The foam may take the form of an extruded rod configuration having a diameter corresponding to any of the previously recited thicknesses and ranges of thicknesses. The foam may take the configuration of segments for example, short rod lengths formed by cutting the rod into relatively short lengths (e.g., for loose fill packaging elements.

Regardless of the provided form, foam products according to certain embodiments of the present invention can comprise a bulk density from about 0.0032 kg/m³ (0.25 lbs/ft³) to about 0.011 kg/m³ (0.9 lbs/ft³), or from about 0.0038 kg/m³ (0.3 lbs/ft³) to about 0.010 kg/m³ (0.8 lbs/ft³), and more particularly from about 0.0051 kg/m³ (0.4 lbs/ft³) to about 0.0077 kg/m³ (0.6 lbs/ft³). Stated somewhat differently, the foams of various embodiments disclosed herein may have a bulk density of at least any of 0.0032, 0.0038, 0.0051, 0.0064, 0.010, 0.013, 0.019, 0.026,0.038, 0.051, 0.064, 0.077 and 0.089 kg/m³ (0.25, 0.3, 0.4, 0.5, 0.8, 1.0, 1.5, 2, 3, 4, 5, 6, and 7 pounds/cubic foot); and/or at most any of 0.13, 0.11, 0.10, 0.089, 0.076, 0.064, 0.051, 0.038,0.026, 0.013, 0.011 and 0.010 kg/m³ (10, 9, 8, 7, 6, 5, 4, 3, 2, 1.0, 0.9 and 0.8 lbs/ft³). Density of the foam is measured according to ASTM D3575. Further, the foam may have any of the recited densities in combination with any of the above recited thicknesses.

In another aspect, the present invention provides expandable compositions that can be extruded to provide foam products in accordance with certain embodiments of the present invention. Certain embodiments include a starch, a SAP present from about 0.001 to about 10% by weight of the expandable composition, and an expanding agent. In certain preferred embodiments, the expandable composition also includes a binding agent. Preferably, the expandable composition is also flowable and extrudable.

### Expanding (blowing) Agent

The expandable composition may comprise an expanding agent (e.g., a blowing agent). Expanding agents include physical blowing agents and chemical blowing agents. A "physical blowing agent" is a blowing agent that does not require a chemical reaction to generate the foaming gas or vapor, the latter being characterized as a "chemical blowing agent." Physical blowing agents include carbon dioxide, hydrofluorocarbons (HFCs), chlorofluorocarbons, hydrochlorofluorocarbons, nitrogen, acetone, methylene chloride, hydrocarbon blowing agents (i.e., hydrocarbons, such as one or more of the following: ethane, propane, n-butane, isobutane, pentane, hexane, and butadiene), and mixtures thereof. Many physical blowing agents, and in particular hydrocarbon blowing agents, provide the advantage of being dissolvable in the feedstock under the extrusion conditions provided in extrusion mixing the starch and other components - yet flash to vapor upon exposure to ambient pressure when exiting the extruder to foam the mixture.

The blowing agent may be mixed with the feedstock of starch and other components in the desired amount to achieve a desired degree of expansion in the resultant foam. Generally, the blowing agent may be added to the feedstock in an amount of at least any of 0.5 parts, 1 part, 3 parts, and/or at most 80 parts, 30 parts, and 15 weight parts, based on 100 parts by weight of the feedstock.

In certain embodiments, the expandable composition includes an expanding agent comprising a liquid substance having a boiling point less than the temperature at which the expandable composition will be processed into a foam product so that the expanding agent vaporizes and expands to form a plurality of bubbles or pockets within the composition. In certain preferred embodiments, the expanding agent comprises water or an alcohol (e.g., glycols, glycerols). In this regard, various embodiments may alternatively utilize an expanding agent comprising a liquid hydrocarbon (e.g., having from 1 to 8 carbons such as heptane, n-pentane, and octane).

Expandable compositions, in certain preferred embodiments, may comprise an expanding agent in any of the following amounts: at least about any of 1, 5, 10, 15%; and/or at most about any of 50,40, 30, 25, and 20%, based on the weight of the expandable composition. In embodiments in which the expanding agent comprises water, the weight percentage of the expanding agent comprises the aggregate of any moisture (e.g., water) contained within the starch and any external water added to form the expandable composition as discussed below. For instance, in certain embodiments the feedstock comprises sorghum grain (e.g., sorghum starch) which typically contains at least some inherent moisture content. This inherent moisture can be utilized as a component of the total quantity of the expanding agent.

The quantity of starch present within expandable composition, according to certain embodiments, can constitute a majority of the expandable composition. For instance, expandable compositions in accordance with certain embodiments may comprise starch in an amount of about at least any of the following: 50, 60, 70, and 75% and/or at most about any of the following 99, 95, 90, and 85% by weight of the expandable composition.

Expandable compositions according to certain embodiments of the present invention contain a relatively small amount of a SAP. In certain embodiment, for instance, expandable compositions comprise one or more SAPs in the amount of at least about any of the follow: 0.001, 0.01, 0.1, 0.5, and 1%; and SAP is present in an amount at most 1%, by weight of the expandable composition. Examples of suitable SAPs that can be used in accordance with certain embodiments of the present invention may comprise one or more of the following polymers (i.e., types of SAP): (1) alkali metal salts of polyacrylic acids, (2) polyacrylamides, (3) unsaturated carboxylic acid anhydride copolymers, for example, ethylene/maleic anhydride copolymers and isobutylene/maleic anhydride copolymer, (4) polyvinyl ethers, (5) cellulose-based SAPs, for example, hydroxypropylcellulose and carboxy-methyl-cellulose, (6) polyvinyl morpholinone, (7) polymers and copolymers of vinyl sulfonic acid, (8) polyacrylates, (9) polyvinyl pyridine, (10) isobutylene maleic anhydride copolymers, and combinations thereof. In one preferred embodiment, the SAP comprises an alkali metal salt of a cross-linked polyacrylate (e.g., sodium polyacrylate), carboxy-methyl-cellulose. Sodium polyacrylate is commercially available under the trade name FAVOR PAC 530 from Evonik Industries (Germany).

In certain embodiments, expandable compositions may comprise one or more binders in any of the following amounts: at least about any of 0.5, 1, 3, 5%; and/or at most about any of 20, 15, 10, and 5%, based on the weight of the expandable composition. In certain preferred embodiments, the binder may comprise PVOH or a corn syrup.

### Processes of Making the Foam

In yet another aspect, the present invention provides processes for the production of foam products (e.g., foams having starch as a major component). In certain embodiments according to the present invention, the process can include a mixing step and an expanding step. According to certain embodiments of the present invention, the mixing step can comprise mixing starch, expanding agent, and SAP to create an expandable composition over a given total amount of time and the expanding step comprises expanding the expandable composition to create a foam product. Expandable compositions in accordance with embodiments of the present invention can be expanded, for example, by an extrusion process to provide a foam product. In certain embodiments, the mixing step can occur either in a mixing section of an extruder or prior to a step of feeding the expandable composition to an extruder. Accordingly, the formation of the expandable composition can comprise pre-mixing all or some of the components (e.g. starch, expanding agent, SAP, etc.) prior to feeding the composition to, for example, an extruder for expansion into a foam product. In certain preferred embodiments, the mixing step comprises mixing starch, expanding agent, SAP, and binding agent to create the expandable composition.

In making foam according to certain embodiments of the present disclosure, the starch and other components can be added to a mixer (e.g., ribbon mixer) separately or simultaneously to form a masterbatch composition that can be provided to an extruder. In certain embodiments, the masterbatch composition comprises an expandable composition while in other embodiments the masterbatch composition can be devoid of an expanding agent. In embodiments in which the masterbatch composition is devoid of an expanding agent, the expanding agent can be added to the masterbatch composition as it passes through a mixing section of an extruder.

In certain preferred embodiments, a starch-based composition comprising starch and an expanding agent, preferably a liquid expanding agent, can be formed by inter-mixing the expanding agent throughout the starch prior to addition of other components (e.g. SAP). Preferably, the mixing of the starch and the expanding agent is conducted for a period of time and in such a manner to provide a generally homogeneous distribution of the expanding agent throughout the starch. Although the particular mixing device used is not critical, mixing units capable of mixing highly viscous materials can be particularly desirable given the thick and high solids content of the starch-based composition. In certain embodiments, the starch-based composition comprising a starch and an extruding agent (preferably liquid) are mixed to provide a relatively homogeneous consistency resembling a flowable and grainy solid mixture. After formation of the starch-based composition, an additive mixing step can be performed in which a SAP is added and mixed throughout to provide an expandable composition. In certain embodiments, a binding agent can also be added and mixed into the starch-based composition to provide an expandable composition.

Expandable compositions in accordance with embodiments of the present invention can be extruded by conventional processes (e.g., single or multi-screw extruders) to provide a foam product. Preferably, the pressure at which the extrusion operation is performed is high enough such that the expandable composition does not expand until exiting the die of the extruder. For instance, the extrusion step can be performed at a pressure from about 1500 psig to about 2000psig (e.g., 1700psig to 1800psig). In embodiments utilizing a liquid expanding agent, the extrusion step can be performed at a temperature high enough such that the expanding agent vaporizes and promotes the expansion of the expandable composition upon exiting the die of the extruder. For instance, the temperature at which the extrusion operation is performed can range from about 300°F to about 400°F and the expanding agent can be selected based, at least in part, on having a boiling point below the temperature at which the extruding step is performed so that the expanding agent vaporizes and expands. For example, the expanding agent can comprise water. In such embodiments, therefore, the moisture within the expandable composition acts as the expanding agent.

In certain embodiments, a mixing step comprises mixing starch, expanding agent, and SAP to create an expandable composition over a given total amount of time. Preferably, the addition of the SAP is performed over the final half of the given total amount of time of the mixing step. If the total amount of time of the mixing step, for example, was 60 minutes then the addition of the SAP would occur over the final 30 minutes of the total time. More preferably, the addition of the SAP is performed over the final 25% of the given total amount of time of the mixing step. Most preferably, the addition of the SAP is performed over the final 10% of the given total amount of time of the mixing step. Alternatively, however, the SAP and any other components (e.g., binding agent) can be added to the starch-based composition simultaneously.

In certain alternative embodiments, all of the components of the expandable composition can be added at the same time (or in varying order). For instance, starch, expanding agent, binding agent, and SAP can be added and mixed simultaneously or in any order.

Processes according to certain embodiments of the present invention can also include a step of forming the extruded foam into a desired shape or configuration. In certain embodiments, for instance, the extruded foam can be subjected to a cutting step to form loose fill packaging elements of any desirable size. The extruded foam, however, can be provided in any desired finished form as discussed above (e.g., sheets, rods, planks, tubing, etc.).

According to certain embodiments, the formation of the expandable composition can occur in a mixing section of an extruder. In making foam according to various embodiments, the starch and other components are added to an extruder, and may be added in the form of granules or pellets. The starch and other components can be provided separately and combined during extrusion mixing, or the starch and other components may be provided to the extruder in the form of a masterbatch composition, comprising for example the starch as well as some or all of the other components as discussed above. The extrusion mixing processing step is conducted for sufficient time and at a suitable temperature to promote intimate blending of the components.

In certain embodiments, the expanding agent may be added to the masterbatch via one or more injection ports in the extruder. Similarly, any additives that are used may be added to the masterbatch in the extruder and/or may be added prior to feeding the masterbatch to the extruder.

In accordance with certain preferred embodiments, the mixing step (e.g., combining of starch and other components) occurs in a mixing section of an extruder, in which the mixing section has a given length. Preferably, the SAP is added to the extruder mixing section about halfway down its length (e.g., at about the midpoint of the given length of the mixing section). More preferably, the SAP is added to the extruder mixing section about 75% down its length. Most preferably, the SAP is added to the extruder mixing section about 90% down its length.

The extruder pushes the entire mixture (e.g.; plasticized starch, expanding agent, and any additives) through a die at the end of the extruder and into a region of reduced temperature and pressure (relative to the temperature and pressure within the extruder). Typically, the region of reduced temperature and pressure is the ambient atmosphere. The sudden reduction in pressure causes the expanding agent to nucleate and expand into a plurality of cells that solidify upon cooling of the starch-based mass (due to the reduction in temperature), thereby trapping the blowing agent within the cells.

The die of the extruder can be configured to produce a desired shape and size of the foamed extrudate. The foam may be extruded in the form of relatively thin foam sheet, relatively thick foam plank, and/or rods having circular or other cross-sectional configurations. Any conventional type of extruder may be used, for example, single screw, double screw, and/or tandem extruders.

### EXAMPLES

A series of tests were conducted to compare the properties of foam products including a small quantity of a SAP with similar foam products being devoid of a SAP. In particular, foams were produced using sorghum, which was dehulled and decordified, as the starch component. In the preparation of one inventive foam according to the present invention, a small amount of a SAP (i.e., Cross-linked Sodium Polyacrylate) was added to the expandable composition (e.g., foam precursor) prior to the extrusion operation. A comparison foam product was produced using the same operating procedures and same chemical components, except that the comparison foam product did not include a SAP. Accordingly, the only difference between the inventive foam and the comparison foam was the inclusion of less than 0.1% by weight of a SAP in the inventive foam.

The inventive foam in accordance with one embodiment of the present invention was produced by charging 100 pounds of dehulled and decordified sorghum into a ribbon mixer. After addition of the sorghum, the ribbon mixer was turned on and 9 pounds of water was charged into the ribbon mixer over a period of 5 minutes. The sorghum/water composition was mixed for 30 minutes to provide a flowable and relatively homogeneous consistency resembling a grainy solid mixture. Next, 6 pounds of PVOH was slowly feed into the mixer over a period of about 2-3 minutes. After all of the PVOH was added into the ribbon mixer, the contents within the mixer were mixed for an additional 10 minutes. After the PVOH was mixed-in, 0.06 pounds of FAVOR PAC 530 (Cross-linked Sodium Polyacrylate from Evonik Industries) was added into the mixer. The FAVOR PAC 530 was sprinkled into the mixer over a period of about 2-3 minutes. After all FAVOR PAC 530 had been charged, the contents within the mixer were mixed for an additional 10 minutes. This resulting composition was fed to a preheated single-screw extruder. The operating temperature of the extruder varied from 340°F to 370°F. The extrudate expanded (e.g., "puffed up" or foamed) upon exiting the dye of the extruder and was cut into small lengths to form loose fill packaging elements. The comparison foam was made in the exact manner as the inventive foam, except that the comparison foam did not include a step of adding a SAP.

Several tests were performed on the resulting foam products (i.e., one inventive foam product and one comparison foam product) to evaluate each foams ability to resist drying-out under certain temperature conditions. As shown below, the tests demonstrate that under certain conditions the comparison foam product (i.e., devoid of a SAP) crumbles and produces excessive dusting. As shown in the results below, the addition of a small amount of a SAP into the mix can maintain the necessary moisture to prevent drying without negatively affecting the process or properties. In fact, the test results actually showed an improvement in density and cushion properties for the inventive foam products. The inventive foam products, for instance, had a density of 0.49 lbs/ft³ as compared to a density of 0.44 lbs/ft³ measured for the comparison foam products.

### Void Fill Efficiency (VFE).

Samples of each foam product (i.e., sample of inventive foam product and sample of comparison foam product) were placed in a VFE box, about 3/4 of box height. The box was then placed on a vibration table. The sample height was then measured with a nominal weight, in this case a 0.5 inch plywood board, so as to get an uncompressed height (initial). The ply board was then replaced with a static load, with this height measured after 1 minute (before). The whole assembly was then vibrated at 1 G rms / 5 Hz, for a period of 1 minute. Once completed, the height was measured again (VFE). After each test, the weight and length of samples were recorded. The data is reported as a density in pounds per cubic foot (PCF).

**TABLE 1 - VFE data in pounds per cubic foot.**

| | **Comparison Foam (PCF)** | **Inventive Foam (PCF)** |
|---|---|---|
| Initial PCF (at 0.1 psi) | 0.55 | 0.51 |
| Final PCF (at 0.1 psi) | 0.62 | 0.59 |
| VFE (PCF) | 0.73 | 0.71 |

### Cushion Test (Height Loss)

Back calculating from the void fill efficiency density, three inches of material was placed in a 12 inch cube box. The perspective static load was then placed on the test material, with the thickness measured after 1 minute. After five drops at 30 inches, with two iterations being performed, the final material thickness was measured. All drops were instrumented to measure acceleration in G's.

**TABLE 2 - Percentage height loss data.**

| | **Comparison Foam** | **Inventive Foam** |
|---|---|---|
| % change at 0.05 psi | 15.7 | 13.6 |
| % change at 0.15 psi | 30.6 | 28.5 |
| % change at 0.30 psi | 58.9 | 48.0 |

### Cushion "G" Values

**TABLE 3 - Cushioning "G" values**

| | **Comparison Foam** | **Inventive Foam** |
|---|---|---|
| "G" Value at 0.05 psi | 42 | 39 |
| "G" Value at 0.15 psi | 41 | 37 |
| "G" Value at 0.30 psi | 46 | 36 |

### Oven Aging Tests

Samples of the inventive foam products and the comparison foam products were subjected to several oven aging tests. The particular oven conditions (e.g., temperature and time) are provided in Table 4 below. The samples were packed inside a wire net container to provide a uniform or even exposure to hot air within the oven. At the end of each of the tests, the samples were taken outside, cooled to room temperature, and checked for various physical properties. In particular, each of the samples was inspected for (i) softness/flexibility - hardness/brittleness and (ii) extent of dusting. Each sample was rated on 1 -10 scale (1 being soft/flexible and 10 being hard/brittle and 1 representing no dusting and 10 being excessively dusty).

**TABLE 4 - Data for Oven Aging Tests.**

| **Test Condition** | **Comparison Foam** | **Inventive Foam** |
|---|---|---|
| 180°F for 20 hours | Dried up, Crumbled under slight pressure - 9; Excessive Dusting - 10 | Soft and flexible - 2; No dusting - 1 |
| 160°F for 3 days | Dried up, Crumbled under moderate pressure - 7; Noticeable Dusting - 7 | Soft and flexible - 1; No dusting - 1 |
| 160°F for 6 days | Dried up, Crumbled under slight pressure - 8; Moderate Dusting - 8 | Soft and flexible - 1; No dusting - 1 |
| 160°F for 9 days | Dried up, Crumbled under slight pressure - 9; Excessive Dusting - 9 | Soft and flexible - 2; No dusting - 1 |

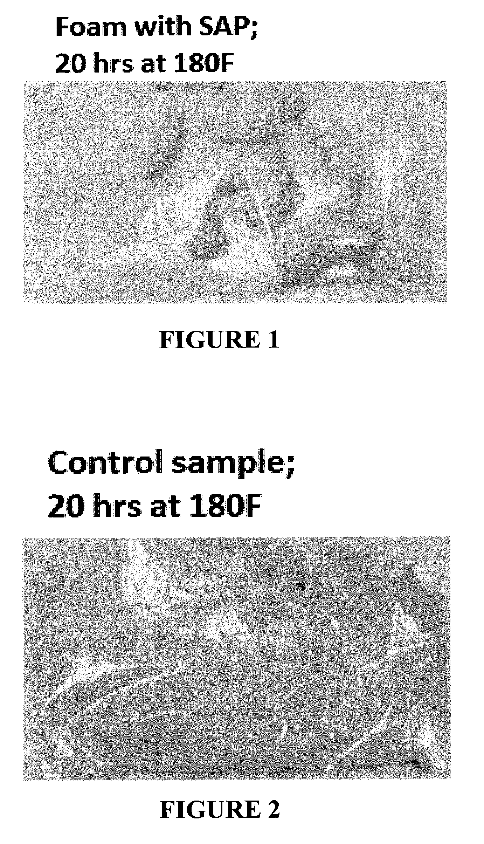

Figure 1 shows the inventive foam products after being subjected to the oven aging test in which the foamed products wear subjected to 180°F for 20 hours. As shown in Figure 1, the foam products according to one embodiment of the present invention maintained their shape after being subjected to pressure. Similar to Figure 1, Figure 2 shows the comparison foam products after being subjected to the oven aging test in which the foamed products were subjected to 180°F for 20 hours. Contrary to the inventive foam products shown in Figure 1, however, the comparison foam products substantially failed to maintain their shape upon pressure. In fact, the comparison foam products substantially crumpled into flakes and dust due to the extreme brittleness of the foam products after the oven aging test. Unlike foam products according to embodiments of the present invention, the comparison foam products dried-out (lost most, if not all moisture with in the foam product) and crumpled into dust upon slight pressure.

### Freezer Tests

Samples from the inventive foam products and the comparison foam products were placed into a freezer at -20°F for 12hrs. The samples were packed inside a wire net container to provide uniform or even exposure to the cold air in the freezer. At the end of the tests, the samples were taken out of the freezer and brought them back to room temperature. The samples were then inspected for (i) softness/flexibility - hardness/brittleness and (ii) extent of dusting. Each sample was rated on 1 -10 scale (1 being soft/flexible and 10 being hard/brittle and 1 representing no dusting and 10 being excessively dusty).

**TABLE 5 - Data from freezer test.**

| **Test Condition** | **Comparison Foam** | **Inventive Foam** |
|---|---|---|
| -20°F for 12 hours | Dried up, crumpled under slight pressure - 9; Excessive dusting - 9 | Soft and flexible - 2; Dusting - 2 |

As demonstrated the foregoing test results, the flexibility and resiliency of foam products according to embodiments of the present invention are beneficially retained, particularly in comparison to foam products that are devoid of a SAP. Accordingly, the cushioning and protecting properties of foam products according to embodiments of the present invention are maintained for a longer period of time in comparison to starch-based foam products being devoid of an SAP.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A foam product comprising:
(a) starch; and
(b) superabsorbent polymer in an amount ranging from 0.001 to 10% by weight of the foam product,
**characterized in that** the amount of superabsorbent polymer is at most 1% by weight of foam product.

2. The foam product of claim 1, wherein the amount of superabsorbent polymer is at most 0.1 % by weight of the foam product, or at least 0.01% by weight of the foam product.

3. The foam product of any one of the preceding claims wherein the superabsorbent polymer comprises one or more polymers selected from:
(1) alkali metal salts of polyacrylic acids,
(2) polyacrylamides,
(3) unsaturated carboxylic acid anhydride copolymers,
(4) polyvinyl ethers,
(5) cellulose-based superabsorbent polymers, preferably carboxy-methyl-cellulose,
(6) polyvinyl morpholinone,
(7) polymers and copolymers of vinyl sulfonic acid,
(8) polyacrylates, preferably alkali metal salt of a cross-linked polyacrylates,
(9) polyvinyl pyridine,
(10) isobutylene maleic anhydride copolymers, and combinations thereof.

4. The foam product of any one of the preceding claims wherein the starch comprises a chemically modified starch or a natural starch, preferably derived from sorghum.

5. The foam product of any one of the preceding claims having a bulk density of at most 0.011 kg/m³ (0.9 lbs/ft³), or at most 0.008 kg/m³ (0.6 lbs/ft³), or at least 0.005 kg/m³ (0.4 lbs/ft³), or at least 0.003 kg/m³ (0.25 lbs/ft³), preferably from 0.003 kg/m³ (0.25 lb/ft³) to 0.011 kg/m³ (0.9 lbs/ft³), preferably from 0.005 kg/m³ (0.4 lbs/ft³) to 0.008 kg/m³ (0.6 lbs/ft³).

6. The foam product of any one of the preceding claims wherein the foam product is provided in the form of loose fill packaging elements, sheets, rods, planks, or tubing.

7. The foam product of any preceding claim further comprising binding agent, preferably from 1 to 10% binding agent by weight of the foam product, preferably selected from water-soluble polymer, preferably polyol agent, preferably polyvinyl alcohol.

8. The foam product of any preceding claim having a moisture content of from 1% to 50% by weight of the foam product, preferably at most 30% by weight of the foam product, or from 10% to 20% by weight of the foam product.

9. A process for producing the foam product of any one of the preceding claims comprising the steps of:
(a) mixing the starch, the superabsorbent polymer, and an expanding agent to create an expandable composition, and
(b) expanding the expandable composition to create the foam product; wherein the mixing step occurs for a given total amount of time.

10. The process of claim 9 wherein the expanding agent comprises water or a physical blowing agent or liquid expanding agent, preferably having a boiling point below the temperature at which the expanding step is performed so that the expanding agent vaporizes and expands.

11. The process of any one of claims 9 to 10 wherein the expandable composition comprises from 5% to 30% expanding agent by weight of the expandable composition, preferably from 5% to 10% expanding agent by weight of the expandable composition.

12. The process of any one of claims 9 to 11 wherein the mixing step adds the superabsorbent polymer during the final half of the given total amount of time of the mixing step, preferably during the last 25% of the given total amount of time of the mixing step or during the last 10% of the given total amount of time of the mixing step.

13. The process of any one of claims 9 to 12 wherein any one or more of the mixing and expanding steps utilizes an extruder.

14. The process of claim 13, wherein the extruder has a mixing section of a given length and the superabsorbent polymer is added to the extruder mixing section at least halfway down its length, preferably at least 75% down its length or 90% down its length.

15. The process of claim 9 wherein the mixing step further comprises mixing binding agent to create the expandable composition.

## Patentansprüche

1. Schaumstoffprodukt, umfassend:
(a) Stärke; und
(b) superabsorbierendes Polymer in einer Menge in einem Bereich von 0,001 bis 10 Gew.-% des Schaumstoffprodukts,
**dadurch gekennzeichnet, dass** die Menge des superabsorbierenden Polymers höchstens 1 Gew.-% des Schaumstoffprodukts ausmacht.

2. Schaumstoffprodukt nach Anspruch 1, wobei die Menge des superabsorbierenden Polymers höchstens 0,1 Gew.-% des Schaumstoffprodukts ausmacht oder zumindest 0,01 Gew.-% des Schaumstoffprodukts.

3. Schaumstoffprodukt nach einem der vorherigen Ansprüche, wobei das superabsorbierende Polymer ein oder mehrere aus Folgendem ausgewählte Polymere umfasst:
(1) Alkalimetallsalze aus Polyakrylsäuren,
(2) Polyakrylamide,
(3) ungesättigte Carbonsäureanhydridcopolymere,
(4) Polyvinylether,
(5) auf Cellulose basierende superabsorbierende Polymere, vorzugsweise Carboxymethylcellulose,
(6) Polyvinylmorpholinon,
(7) Polymere und Copolymere aus Vinylsulfonsäure,
(8) Polyacrylate, vorzugsweise Alkalimetallsalz aus vernetzten Polyacrylaten,
(9) Polyvinylpyridin
(10) Isobutylenmaleinsäureanhydridcopolymere und Kombination davon.

4. Schaumstoffprodukt nach einem der vorherigen Ansprüche, wobei die Stärke eine chemisch modifizierte Stärke oder eine natürliche Stärke umfasst, vorzugsweise abgeleitet von Sorghum (Hirse).

5. Schaumstoffprodukt nach einem der vorherigen Ansprüche mit einer Schüttdichte von höchstens 0,011 kg/m³ (0,9 lbs/ft³) oder höchstens 0,008 kg/m³ (0,6 lbs/ft³) oder mindestens 0,005 kg/m³ (0,4 lbs/ft³) oder mindestens 0,003 kg/m³ (0,25 lbs/ft³), vorzugsweise von 0,003 kg/m³ (0,25 lb/ft³) bis 0,011 kg/m³ (0,9 lbs/ft), vorzugsweise von 0,005 kg/m³ (0,4 lbs/fl³) bis 0,008 kg/m³ (0,6 lbs/ft³).

6. Schaumstoffprodukt nach einem der vorherigen Ansprüche, wobei das Schaumstoffprodukt in Form von losen Füllverpackungselementen, Platten, Stangen, Planken oder Rohren vorgesehen ist.

7. Schaumstoffprodukt nach einem der vorherigen Ansprüche, des Weiteren umfassend ein Bindemittel, vorzugsweise 1 bis 10 Gew.-% des Schaumstoffprodukts, vorzugsweise ausgewählt aus wasserlöslichem Polymer, vorzugsweise Polyolmittel, vorzugsweise Polyvinylalkohol.

8. Schaumstoffprodukt nach einem der vorherigen Ansprüche mit einem Feuchtigkeitsgehalt von 1 bis 50 Gew.-% des Schaumstoffprodukts, vorzugsweise höchstens 30 Gew.-% des Schaumstoffprodukts oder 10 bis 20 Gew.-% des Schaumstoffprodukts.

9. Verfahren zum Herstellen des Schaumstoffprodukts nach einem der vorherigen Ansprüche, umfassend die folgenden Schritte:
(a) Mischen der Stärke, des superabsorbierenden Polymers und eines Quellmittels zum Herstellen einer quellfähigen Zusammensetzung, und
(b) Aufquellen der quellfähigen Zusammensetzung zum Herstellen des Schaumstoffprodukts; wobei der Mischungsschritt in einem festgelegten Gesamtzeitrahmen erfolgt.

10. Verfahren nach Anspruch 9, wobei das Quellmittel Wasser oder ein physikalisches Treibmittel oder ein flüssiges Quellmittel umfasst, vorzugsweise mit einem Siedepunkt, der unter der Temperatur liegt, bei der der Aufquellschritt ausgeführt wird, sodass das Quellmittel verdampft und aufquellt.

11. Verfahren nach einem der Ansprüche 9 bis 10, wobei die quellfähige Zusammensetzung 5 bis 30 Gew.-% Quellmittel der quellfähigen Zusammensetzung umfasst, vorzugsweise 5 bis 10 Gew.-% Quellmittel der quellfähigen Zusammensetzung.

12. Verfahren nach einem der Ansprüche 9 bis 11, wobei beim Mischungsschritt während der letzten Hälfe des festgelegten Gesamtzeitrahmens des Mischungsschritts das superabsorbierende Polymer hinzugefügt wird, vorzugsweise während der letzten 25 % des festgelegten Gesamtzeitrahmens des Mischungsschritts oder während der letzten 10 % des festgelegten Gesamtzeitrahmens des Mischungsschritts.

13. Verfahren nach einem der Ansprüche 9 bis 12, wobei in einem oder mehreren der Schritte des Mischens und Aufquellens eine Abziehvorrichtung angewendet wird.

14. Verfahren nach Anspruch 13, wobei die Abziehvorrichtung einen Mischungsbereich mit einer vorgegebenen Länge hat und das superabsorbierende Polymer mindestens auf halber Länge nach unten zum Mischungsbereich der Abziehvorrichtung hinzugefügt wird, vorzugsweise mindestens auf 75 % der Länge oder 90 % der Länge nach unten.

15. Verfahren nach Anspruch 9, wobei der Mischungsschritt des Weiteren das Mischen des Bindemittels umfasst, um die quellfähige Zusammensetzung herzustellen.

## Revendications

1. Produit de mousse comprenant :
(a) de l'amidon ; et
(b) un polymère superabsorbant en une quantité allant de 0,001 à 10 % en poids du produit de mousse,
**caractérisé en ce que** la quantité de polymère superabsorbant est d'au plus 1 % en poids du produit de mousse.

2. Produit de mousse selon la revendication 1, où la quantité de polymère superabsorbant est d'au plus 0,1 % en poids du produit de mousse, ou au moins 0,01 % en poids du produit de mousse.

3. Produit de mousse selon l'une quelconque des revendications précédentes, où le polymère superabsorbant comprend au moins un polymère choisi parmi :
(1) sels de métal alcalin d'acides polyacryliques,
(2) polyacrylamides,
(3) copolymères d'anhydride d'acide carboxylique insaturé,
(4) éthers polyvinyliques,
(5) polymères superabsorbants à base de cellulose, de préférence carboxyméthylcellulose,
(6) morpholinone polyvinylique,
(7) polymères et copolymères d'acide vinylsulfonique,
(8) polyacrylates, de préférence sel de métal alcalin de polyacrylates réticulés,
(9) polyvinyle pyridine
(10) copolymères d'isobutylène anhydride maléique et combinaisons de ceux-ci.

4. Produit de mousse selon l'une quelconque des revendications précédentes, où l'amidon comprend un amidon modifié chimiquement ou un amidon naturel, de préférence dérivé du sorgho.

5. Produit de mousse selon l'une quelconque des revendications précédentes présentant une densité en vrac d'au plus 0,011 kg/m³ (0,9 lb/pi³), ou au plus 0,008 kg/m³ (0,6 lb/pi³), ou au moins 0,005 kg/m³ (0,4 lb/pi³), ou au moins 0,003 kg/m³ (0,25 lb/pi³), de préférence entre 0,003 kg/m³ (0,25 lb/pit³) à 0,011 kg/m³ (0,9 lb/pi³), de préférence entre 0,005 kg/m³ (0,4 lb/pi³) à 0,008 kg/m³ (0,6 lb/pi³).

6. Produit de mousse selon l'une quelconque des revendications précédentes, où le produit de mousse est fourni sous la forme d'éléments d'emballage en vrac, de feuilles, de tiges, de planches, ou de tubes.

7. Produit de mousse selon l'une quelconque des revendications précédentes comprenant en outre un agent liant, de préférence agent liant de 1 à 10 % en poids du produit de mousse, de préférence choisi parmi un polymère hydrosoluble, de préférence un agent polyol, de préférence de l'alcool polyvinylique.

8. Produit de mousse selon l'une quelconque des revendications précédentes, présentant une teneur en humidité de 1 % à 50 % en poids du produit de mousse, de préférence d'au plus 30 % en poids du produit de mousse, ou de 10 % à 20 % en poids du produit de mousse.

9. Procédé de fabrication du produit de mousse selon l'une quelconque des revendications précédentes, comprenant les étapes suivantes :
(a) mélange de l'amidon, du polymère superabsorbant et d'un agent d'expansion pour générer une composition expansible, et
(b) expansion de la composition expansible pour générer le produit de mousse ; où l'étape de mélange se produit pendant une quantité totale donnée de temps.

10. Procédé selon la revendication 9, où l'agent d'expansion comprend de l'eau ou un agent gonflant physique ou agent d'expansion liquide, présentant de préférence un point d'ébullition inférieur à la température à laquelle l'étape d'expansion est réalisée de sorte que l'agent d'expansion se vaporise et se dilate.

11. Procédé selon l'une quelconque des revendications 9 à 10, où la composition expansible comprend de 5 % à 30 % en poids d'agent d'expansion de la composition expansible, de préférence de 5 % à 10 % en poids d'agent d'expansion de la composition expansible.

12. Procédé selon l'une quelconque des revendications 9 à 11, où l'étape de mélange ajoute le polymère superabsorbant lors de la dernière moitié de la quantité totale donnée de temps de l'étape de mélange, de préférence au cours des derniers 25 % de la quantité totale donnée de temps de l'étape de mélange ou au cours des derniers 10 % de la quantité totale donnée de temps de l'étape de mélange.

13. Procédé selon l'un quelconque des revendications 9 à 12, où l'une quelconque ou plus des étapes de mélange et d'expansion se font à l'aide d'une extrudeuse.

14. Procédé selon la revendication 13, où l'extrudeuse présente une section de mélange d'une longueur donnée et le polymère superabsorbant est ajouté à la section de mélange de l'extrudeuse au moins à mi-chemin de sa longueur, de préférence au moins à 75 % de sa longueur ou 90 % de sa longueur.

15. Procédé selon la revendication 9, où l'étape de mélange comprend en outre le mélange d'un agent liant pour générer une composition expansible.
